# EUROPÄISCHE PATENTANMELDUNG

(11) **EP 0 696 724 A1**
(43) Veröffentlichungstag der Anmeldung: **14.02.1996**
(21) Anmeldenummer: 95110246.6
(22) Anmeldetag: 30.06.1995
(51) Int. Cl.: G01D 13/22, G12B 11/04

(54) **Beleuchteter Zeiger für ein Anzeigeinstrument und Anzeigeinstrument damit**

(30) Priorität: 30.07.1994 DE 4427049
(71) Anmelder: ROBERT BOSCH GMBH, D-70442 Stuttgart (DE)
(72) Erfinder: Knoll, Peter, Prof., Dr.-Ing., D-76275 Ettlingen (DE)
(74) Vertreter: Friedmann, Jürgen, Dr.-Ing.

(57) **Zusammenfassung**

Es wird ein beleuchteter Zeiger (28) für ein Anzeigeinstrument vorgeschlagen, der einen länglichen Hohlkörper (1) aufweist, der in seinem Hohlraum (19) einen elektrisch leitfähigen Draht (4) aufweist, der über je eine Durchführung (5) und Zuleitungen (6, 7) mit Anschlüssen (26, 27) verbunden ist, die sich an einem Befestigungsteil (2) befinden, in welchem der Hohlkörper (1) gehaltert ist. Durch Zuleitung von elektrischem Strom zum Draht (4) strahlt der Zeiger (28) Licht (23) ab.

## Beschreibung

### Stand der Technik

Die Erfindung geht aus von einem beleuchteten Zeiger nach dem Oberbegriff des Anspruchs 1. Aus der DE-OS 36 26 957 ist bereits ein beleuchteter Zeiger für ein Anzeigeinstrument bekannt, welcher aus einem transparenten Material besteht und in den Licht von einer Lichtquelle eingekoppelt wird, so daß der Zeiger als Lichtleiter fungiert, aus dem dann das Licht zur das Anzeigeinstrument betrachtenden Person hin reflektiert wird. Dabei muß eine aufwendige Optik für die Zuleitung des Lichts von der getrennt vom Zeiger angeordneten Lichtquelle zum Zeiger hin vorgesehen werden. Außerdem gehen auf dem Weg von der Lichtquelle zum Zeiger erhebliche Anteile des Lichts durch Streuung und Reflexion verloren, welche somit nicht zur Beleuchtung des Zeigers beitragen. Zudem sind Zeiger mit Gasentladungslampen bekannt, die mit Wechselstrom hoher Frequenz gespeist werden. Außerdem ist dabei gegebenenfalls eine Heizung der Gasentladungslampe bei niedrigen Temperaturen notwendig.

### Vorteile der Erfindung

Der erfindungsgemäße beleuchtete Zeiger mit den kennzeichnenden Merkmalen des Hauptanspruchs hat demgegenüber den Vorteil, daß keine optischen Elemente für die Zuleitung von Licht zum Zeiger vorgesehen werden müssen. Außerdem wird die gesamte für die Beleuchtung des Zeigers nötige Lichtmenge im Zeiger selbst erzeugt, so daß keine Verluste auf dem Weg zwischen der Lichtquelle und dem Zeiger selbst auftreten können.

Desweiteren ist der Vorteil gegeben, daß der beleuchtete Zeiger im Gegensatz zu selbstleuchtenden Zeigern mit Gasentladungslampen nahezu unabhängig von der Umgebungstemperatur des Zeigers eine große Lichtausbeute ergibt und so keine zusätzliche Heizvorrichtung für den Zeiger vorgesehen werden muß. Außerdem genügt zur Erzeugung des Lichts im Zeiger bereits eine Ansteuerung mit Gleichstrom, wodurch keine Abstrahlung hoher Frequenzen über eine Wechselspannungsquelle erfolgt, was die Problematik der elektromagnetischen Verträglichkeit (EMV) verringert.

Durch die in den Unteransprüchen 2 bis 7 aufgeführten Maßnahmen sind vorteilhafte Weiterbilungen und Verbesserungen des im Anspruch 1 angegebenen beleuchteten Zeigers möglich.

Die Ausführung des selbstleuchtenden Zeigers aus Glas bringt den Vorteil mit sich, daß der aus dem Glas gebildete Hohlkörper gegen die durch den elektrischen Strom im Draht entwickelte Hitze besonders beständig ist. Außerdem ist Glas ein relativ hartes Material, wodurch die für das Zeigerverhalten schädliche Elastizität verringert ist. Desweiteren ist bekannt, daß Glas besonders gasdicht ist, so daß bei einer eventuellen Evakuierung des Hohlraumes ein besonders gutes und beständiges Vakuum erzeugbar ist. Außerdem ist Glas ein kostengünstiger Werkstoff.

Ebenso vorteilhaft ist es, den Hohlraum zu evakuieren, da dadurch die Oxidation des Drahtes bei der Lichterzeugung vermindert und so die Lebensdauer des Zeigers verlängert wird.

Das Beschichten des Hohlkörpers mit einer lichtundurchlässigen Abdeckschicht bewirkt den Vorteil, daß dort wo die Abdeckschicht auf dem Hohlkörper aufgebracht ist, kein Licht austreten kann, wodurch mittels der Auswahl der zu beschichtenden Fläche des Hohlkörpers gezielt die Region eingestellt werden kann, in die der Lichtstrom vom Zeiger aus gelenkt werden soll.

Wird die Abdeckschicht zum Hohlkörper hin spiegelnd ausgeführt, so erhöht sich in vorteilhafter Weise die zum Betrachter hingelenkte Zeigerhelligkeit.

Die Führung der Zuleitungen auf der dem Betrachter abgewandten Seite des Hohlkörpers am Hohlkörper entlang stellt eine besonders vorteilhafte Realisierung der Zuleitungen dar, da die Führung der Zuleitungen so für den Betrachter unsichtbar erfolgt und somit nicht den vom Zeiger in Richtung zum Betrachter ausgehenden Lichtstrom stört.

Die Ausgestaltung des Zeigers mit Kontaktflächen, so daß der Hohlkörper in das Befestigungsteil eingeschoben werden kann, bietet den Vorteil, daß zur Auswechslung des Hohlkörpers, insbesondere bei Defekt, ein bloßes Herausziehen des einen und ein Einschieben des anderen Hohlkörpers ausgeführt werden muß, wodurch sich der Auswechselprozeß wesentlich vereinfacht.

Wird eine Welle für eine Anzeigevorrichtung gemäß dem nebengeordneten Anspruch 8 aus einem elektrisch leitfähigen Material gefertigt und mit einem der beiden Anschlüsse des Zeigers verbunden, so wird eine ohnehin für den Antrieb des Zeigers benötigte Welle gleichzeitig als elektrischer Leiter verwendet, wodurch keine komplizierte Anordnung zur Leitung des elektrischen Stromes über diesen Anschluß vorgesehen werden muß.

Die Verbindung der Welle mit einer elektrischen Spannungsquelle über einen Schleifkontakt ist eine vorteilhafte Ausgestaltung, da dieser elektrisch leitfähige Kontakt auch bei einer Umdrehung des Zeigers um größere Drehwinkel zuverlässig und dauerhaft ist.

Es ergibt sich der Vorteil, daß auch für den Anschluß der Welle, der nicht mit dieser elektrisch leitfähig verbunden ist, eine auch bei der Rotation des Zeigers beständige, elektrische Verbindung zwischen der elektrischen Spannungsquelle und dem Anschluß gewährleistet ist, wenn der weitere Anschluß mit einer Spiralfeder verbunden ist.

### Zeichnung

Ausführungsbeispiele der Erfindung sind in der Zeichnung dargestellt und werden in der nachfolgenden Beschreibung näher erläutert.

Es zeigen:
Figur 1 einen Querschnitt durch ein Anzeigeinstrument mit festem beleuchtetem Zeiger,
Figur 2 einen Querschnitt durch ein Anzeigeinstrument mit herausziehbarem beleuchtetem Zeiger.

### Beschreibung der Ausführungsbeispiele

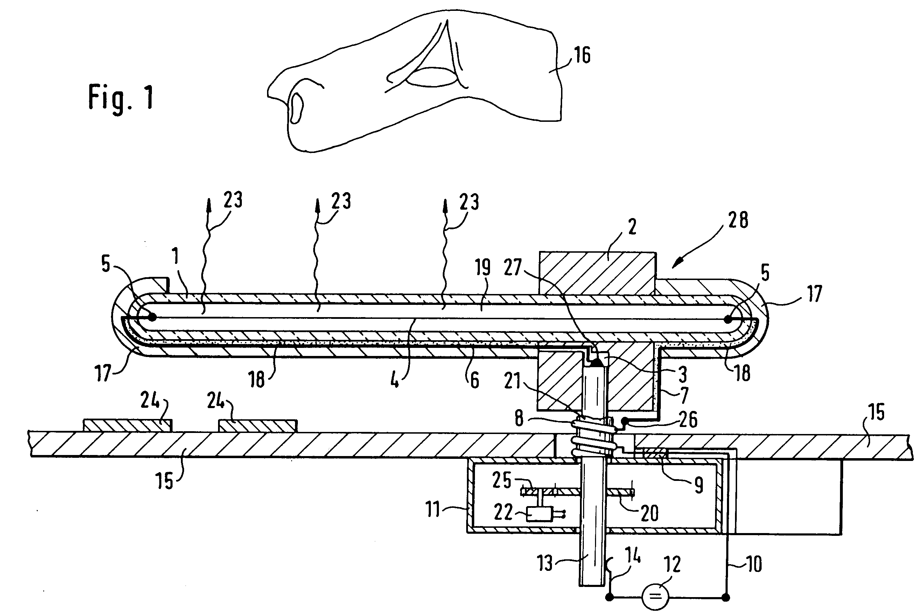

In Figur 1 ist ein Anzeigeinstrument dargestellt. Es umfaßt ein Zifferblatt 15, welches auf seiner einem Betrachter 16 zugewandten Oberseite meherere Symbole 24 trägt. Das Zifferblatt 15 ist an seiner Unterseite auf einem Gehäuse 11 befestigt, in dem ein Antrieb 22 angeordnet ist. Das Gehäuse 11 weist an seiner Ober- und Unterseite je eine runde Aussparung auf, durch die eine Welle 13 geführt ist. Die Welle 13 durchstößt dabei eine im Zifferblatt 15 vorhandene Aussparung. Zum rotatorischen Antrieb der Welle 13 ist auf der Welle 13 ein Ritzel 20 angebracht, welches mit einem Antriebsrad 25 kämmt. Das Antriebsrad 25 wird vom Antrieb 22 angetrieben. Ein Zeiger 28 umfaßt einen transparenten, länglichen Hohlkörper 1, an dessen beiden Stirnenden je eine elektrisch leitfähige Durchführung 5 angebracht ist. Die Durchführungen 5 durchstossen die Stirnwände des Hohlkörpers 1 und enden im Hohlraum 19 des Hohlkörpers 1. Die Durchführungen 5 sind miteinander innerhalb des Hohlraums 19 über einen den elektrischen Strom leitenden als Glühfaden dienenden Draht 4 verbunden. Außerhalb des Hohlkörpers 1 sind die Durchführungen 5 mit Zuleitungen 6, 7 verbunden. Der Hohlkörper 1 durchstößt eine zum Hohlkörper 1 passend geformte Aussparung in einem Befestigungsteil 2. Dabei ragt der Hohlkörper 1 auf einem Großteil seiner Länge auf einer Seite des Befestigungsteiles 2 heraus und nur zu einem geringen Teil seiner Länge auf der gegenüberliegenden Seite des Befestigungsteils 2. Das Befestigungsteil 2 weist ein Verbindungselement in Form einer Vertiefung 3 auf, die senkrecht zum im Befestigungsteil 2 gehalterten Hohlkörper 1 verläuft. Die auf dem längeren der beiden aus dem Befestigungsteil 2 herausragenden Enden des Hohlkörpers 1 liegende Zuleitung 6 ist auf der der Vertiefung 3 zugewandten und somit der dem Betrachter 16 abgewandten Seite des Hohlkörpers 1 auf der Oberfläche des Hohlkörpers 1 entlang dessen Längsachse zum Befestigungsteil 2 geführt. Die Zuleitung 6 ist dabei durch das Befestigungsteil 2 in die Vertiefung 3 geführt, wo sie in einen Anschluß 27 übergeht. Der Anschluß 27 ist elektrisch leitfähig mit der aus einem elektrisch leitfähigen Material bestehenden Welle 13 verbunden ist. Zwischen dem Befestigungsteil 2 und dem Gehäuse 11 ist auf der Welle 13 eine Isolierhülse 21 aufgebracht, auf die eine Spiralfeder 8 aufgewickelt ist. Die Zuleitung 7, welche auf dem kürzeren der beiden aus dem Befestigungsteil 2 herausragenden Enden des Hohlkörpers 1 liegt, ist auf der dem Zifferblatt 15 zugewandten Oberfläche des Hohlkörpers 1 entlang dessen Längsachse zum Befestigungsteil 2 geführt, wo sie in einen Anschluß 26 übergeht. Die beiden Zuleitungen 6, 7 sind mittels eines Klebstoffs 18 auf der Oberfläche des Zeigers 28 befestigt. Der Anschluß 26 ist mit der Spiralfeder 8 elektrisch leitend verbunden. Das andere Ende der Spiralfeder 8 ist mit einem Anschlußdraht 10 versehen, der mittels einer Haltelasche 9, welche auf dem Gehäuse 11 angeordnet ist, in seiner Position festgehalten wird. Der Anschlußdraht 9 verbindet die Spiralfeder 8 mit einem Pol einer elektrischen Spannungsquelle 12, deren anderer Pol mit einem Schleifkontakt 14 versehen ist. Der Schleifkontakt 14 berührt mit einem Federdruck die Welle 13 unterhalb des Gehäuses 11. Der Hohlkörper 1 ist zusätzlich mit einer Abdeckschicht 17 versehen, welche die gesamte Oberfläche des kürzeren der beiden aus dem Befestigungsteil 2 herausragenden Enden des Hohlkörpers 1, sowie das längere der beiden aus dem Befestigungsteil 2 herausragenden Enden des Hohlkörpers 1 auf nur einem Teil seiner Oberfläche bedeckt. Es wurde dabei genau der Teil durch die Abdeckschicht 17 ausgespart, durch welchen Licht 23 zum Auge des Betrachters 16 gelangen soll.

Durch die elektrische Spannungsquelle 12 wird elektrischer Strom über den Schleifkontakt 14, die Welle 13, den Anschluß 27, die Zuleitung 6 und die Durchführung 5, sowie über den Anschlußdraht 10, die Spiralfeder 8, den Anschluß 26, die Zuleitung 7 und die zweite Durchführung 5 zum Draht 4 geleitet. Der durch den Draht 4 fließende elektrische Strom bewirkt eine Erhitzung des Drahtes 4 bis zum glühenden Zustand, so daß durch das Glühen das Licht 23 abgegeben wird. Somit wird das Licht 23 im Hohlkörper 1 selbst erzeugt. Wird der Zeiger 28 mittels des Antriebs 22 über das Antriebsrad 25, das Ritzel 20 und die Welle 13 drehend angetrieben, so bewirken der Schleifkontakt 14 und die Spiralfeder 8 eine auch bei der Rotation des Zeigers 28 bestehend bleibende elektrische Verbindung der Anschlüsse 26, 27 mit der elektrischen Spannungsquelle 12. Durch die Aussendung des Lichts 23 durch die in der Abdeckschicht 17 auf dem Hohlkörper 1 vorgesehene Aussparung erscheint der Zeiger 28 als leuchtender Stab, der vom Betrachter 16 gut erkennbar ist, wobei der Zeiger 28 durch Variation seines Drehwinkels auf eines der Symbole 24 auf dem Zifferblatt 15 zeigt. Die Abdeckschicht 17 kann zumindest auf der Seite der Wandung des Hohlkörpers 1 als Verspiegelung ausgebildet sein, die elektrisch gegen die Zuleitungen 6, 7 isoliert ist, so daß eine Reflexion der Lichtstrahlen im Hohlraum 19 zum Betrachter 16 hin erfolgt. Die Zuleitungen 6, 7 können dabei auch selbst als Abdeckschicht 17 fungieren.

Es ist vorgesehen, den Hohlraum 19 im Hohlkörper 1 zu evakuieren, so daß aufgrund der dadurch verringerten Oxidation eine höhere Lebensdauer für den selbstleuchtenden Zeiger 28 erreicht werden kann und ein frühzeitiges Durchbrennen des Glühfadens verhindert wird. Dazu ist es weiter vorgesehen, den Hohlkörper 1 aus Glas zu fertigen, da Glas als besonders temperaturstabil, gasdicht und unelastisch betrachtet werden kann, wodurch es für die Anwendung beim beleuchteten Zeiger 28 besonders gut geeignet ist. Die Befestigung der Welle 13 am Befestigungsteil 2 mittels der Vertiefung 3 ist nur beispielhaft zu sehen. Ebenso sind andere Befestigungsmethoden wie z.B. Kleben oder Schrauben möglich. Anstelle der Befestigung der Zuleitungen 6, 7 mittels des Klebstoffs 18 ist es ebenso vorgesehen, die Zuleitungen 6, 7 auf den Hohlkörper 1 direkt aufzudampfen. Ebenso kann die elektrische Zuleitung zum Zeiger statt über Spiralfeder 8 und Schleifkontakt 14 über eine bandförmige, dauerelastische Zuleitung erfolgen, z.B. kupferkaschierte Kaptanfolie.

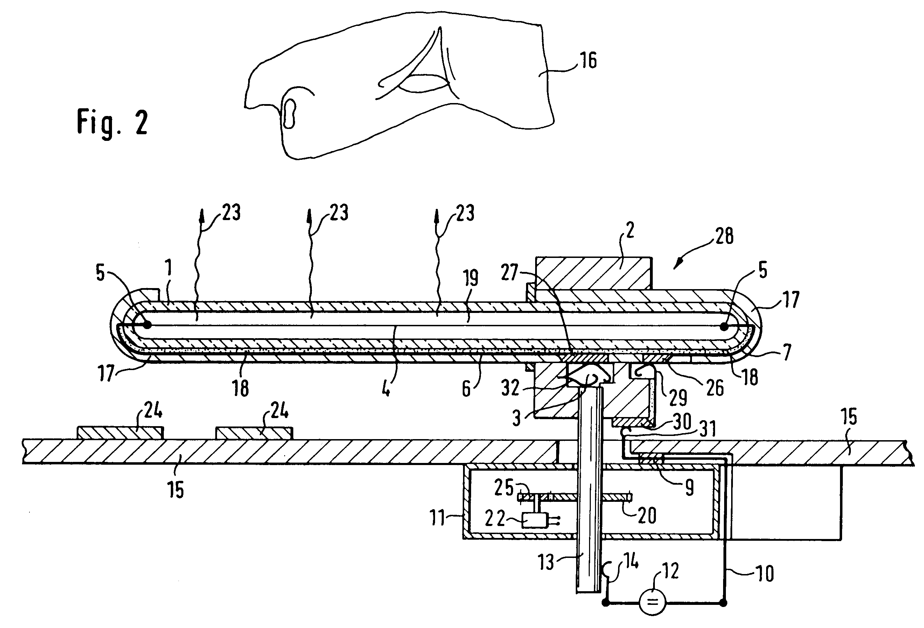

In der Figur 2 ist ein weiters Ausführungsbeispiel für den beleuchteten Zeiger 28 dargestellt. Die Numerierung der Figur 1 wurde dabei beibehalten. Dabei bestehen folgende Unterschiede zur Figur 1: Die Anschlüsse 26, 27 sind direkt auf der Oberfläche des Hohlkörpers 1 angebracht. Dabei wurden deren Oberflächen als Kontaktflächen ausgebildet, die gemeinsam mit der Abdeckschicht 17 auf einer Ebene liegen. Das Befestigungsteil 2 weist seinerseits oberhalb der Vertiefung 3 einen Federkontakt 32 auf, der je eine zur Vertiefung 3 und eine zur der Form des Hohlkörpers 1 angepaßten Aussparung hin gerichtete Feder aufweist. Die zur Vertiefung 3 hin gerichtete Feder ist dabei so ausgebildet, daß sie beim Einschieben der Welle 13 in die Vertiefung 3 einen elektrisch leitenden Kontakt mit der Welle 13 bildet. Die zur Aussparung im Hohlkörper 1 hin gerichtete Feder ist dabei so ausgebildet, daß sie beim Einschieben des Hohlkörpers 1 in die Aussparung einen elektrisch leitenden Kontakt mit dem mit der auf dem längeren der beiden aus dem Befestigungsteil 2 herausragenden Enden des Hohlkörpers 1 liegenden Zuleitung 6 verbundenen Anschluß 27 bildet. Am Befestigungsteil 2 ist weiterhin ein Flächenkontakt 30 angebracht, der mit einem weiteren Federkontakt 29 elektrisch leitend verbunden ist, der ebenfalls in die der Form des Hohlkörpers 1 angepaßte Aussparung ragt, so daß beim Einschieben des Hohlkörpers 1 in die Aussparung der mit der auf dem kürzeren der beiden aus dem Befestigungsteil 2 herausragenden Enden des Hohlkörpers 1 liegenden Zuleitung 7 verbundene Anschluß 26 in einen elektrisch leitenden Kontakt mit dem Federkontakt 29 gerät. Der Anschlußdraht 10 ist hier außerdem an seinem dem Befestigungsteil 2 zugewandten Ende mit einem weiteren Schleifkontakt 31 versehen, der beim Einführen der Welle 13 in die Vertiefung 3 mit dem Flächenkontakt 30 in einen elektrisch leitenden Kontakt gerät. Der Zeiger 28 weist zudem an der Abdeckschicht 17 eine Verdickung auf, welche beim Einschieben des Hohlkörpers 1 in das Befestigungsteil 2 als Anschlag dient.

Der Hohlkörper 1 ist somit durch einfaches Verschieben in das Befestigungsteil 2 hineinsteckbar oder aus ihm herausziehbar. Ebenso erfolgt die Montage und Demontage des Befestigungsteils 2 auf der Welle 13 durch einfaches Aufstecken oder Abziehen. Sämtliche elektrischen Kontakte werden dabei automatisch hergestellt. Es sind keinerlei Lötverbindungen notwendig. Insbesonders zur Auswechslung von Hohlkörpern 1, beispielsweise bei Defekt, ist ein besonders aufwandsarmes Auswechseln möglich. Da alle elektrischen Kontakte zwischen bewegten Teilen und räumlich fixierten Teilen in Form von Schleifkontakten 14, 31 realisiert sind, besteht keine Gefahr einer Fehlfunktion auch bei großen Drehwinkeln des Zeigers 28.

Die Spannungsquelle 12 ist vorzugsweise eine Gleichspannungsquelle, da dadurch keine hohen Frequenzen der Spannung entstehen, die eventuell bei anderen Bauteilen oder Schaltungen, die dem Anzeigeinstrument nahegelegen sind elektromagnetische Störungen verursachen würden. Da durch den durch den Draht 4 fließenden elektrischen Strom auch Wärme erzeugt wird, ist die Funktion des beleuchteten Zeigers 28 praktisch unabhängig von der Umgebungstemperatur, im Gegensatz zu Gasentladungslampen, bei denen gegebenenfalls eine Heizvorrichtung notwendig ist.

## Patentansprüche

1. Beleuchteter Zeiger für ein Anzeigeinstrument, dadurch gekennzeichnet, daß der Zeiger einen wenigstens teilweise transparenten länglichen Hohlkörper (1) aufweist, der an seinen beiden Enden je eine den elektrischen Strom leitende Durchführung (5) aufweist, wobei die Durchführungen (5) innerhalb des Hohlraumes (19) des Hohlkörpers (1) über einen elektrisch leitfähigen Draht (4) miteinander verbunden sind und daß der Hohlkörper (1) in einem Befestigungsteil (2) gehaltert ist, welches ein Verbindungselement (3) aufweist, an dem eine den Hohlkörper (1) annähernd senkrecht zu ihrer Achse halternde Welle (13) befestigbar ist und daß die Durchführungen (5) mit je einer Zuleitung (6, 7) elektrisch leitend verbunden sind, die von den Durchführungen (5) ausgehend am Hohlkörper (1) entlang zum Befestigungsteil (2) geführt sind, wo sie in Anschlüsse (26, 27) zur Zuführung eines elektrischen Stroms über die Zuleitungen (6, 7) und die Durchführungen (5) zum Draht (4) übergehen.

2. Beleuchteter Zeiger nach Anspruch 1, dadurch gekennzeichnet, daß der Hohlkörper (1) aus Glas besteht.

3. Beleuchteter Zeiger nach Anspruch 1 oder 2, dadurch gekennzeichnet, daß der Hohlraum (19) evakuiert ist.

4. Beleuchteter Zeiger nach einem der Ansprüche 1 bis 3, dadurch gekennzeichnet, daß der Hohlkörper (1) teilweise mit einer lichtundurchlässigen Abdeckschicht (17) beschichtet ist.

5. Beleuchteter Zeiger nach Anspruch 4, dadurch gekennzeichnet, daß die Abdeckschicht (17) zur Wandung des Hohlkörpers (1) hin spiegelnd ausgeführt ist.

6. Beleuchteter Zeiger nach einem der Ansprüche 1 bis 5, dadurch gekennzeichnet, daß die Zuleitungen (6, 7) auf der dem Betrachter (16) abgewandten Seite des Hohlkörpers (1) am Hohlkörper (1) entlang geführt sind.

7. Beleuchteter Zeiger nach einem der Ansprüche 1 bis 6, dadurch gekennzeichnet, daß die Anschlüsse (26, 27) als am Hohlkörper (1) befestigte Kontaktflächen ausgebildet sind und daß das Befestigungsteil (2) Federkontakte (29, 32) aufweist, und daß der Hohlkörper (1) in das Befestigungsteil (2) einschiebbar ist und daß die Federkontakte (29, 32) im eingeschobenen Zustand mit den Anschlüssen (26, 27) in einem elektrisch leitfähigen Kontakt stehen.

8. Anzeigevorrichtung mit einem beleuchteten Zeiger nach einem der Ansprüche 1 bis 7, dadurch gekennzeichnet, daß das Befestigungsteil (2) über das Verbindungselement (3) mit der Welle (13) verbunden ist und daß die Welle (13) aus einem elektrisch leitfähigen Material besteht und mit einem der beiden Anschlüsse (26, 27) elektrisch leitfähig verbunden ist.

9. Anzeigevorrichtung nach Anspruch 8, dadurch gekennzeichnet, daß die Welle (13) über einen Schleifkontakt (14) mit einer elektrischen Spannungsquelle (12) elektrisch leitfähig verbindbar ist.

10. Anzeigevorrichtung nach Anspruch 8 oder 9, dadurch gekennzeichnet, daß der nicht mit der Welle (13) elektrisch leitfähig verbundene Anschluß (26) mit einer Spiralfeder (8) elektrisch leitfähig verbunden ist, die um die Welle (13) herum angeordnet ist.
